# EUROPEAN PATENT SPECIFICATION

(11) **EP 3 026 085 B1**
(45) Date of publication and mention of the grant of the patent: **12.08.2020**
(21) Application number: 14830254.0
(22) Date of filing: 21.05.2014
(51) Int. Cl.: C08L 83/07, C08K 3/34, C08K 3/36, C09K 3/10, E04B 1/94, C08K 5/00, C08K 5/14, C08K 5/56, F16J 15/00, F16J 15/02, F16J 15/10, C09D 183/04

(54) **SILICONE RUBBER COMPOSITION**
SILIKONKAUTSCHUKZUSAMMENSETZUNG
COMPOSITION DE CAOUTCHOUC DE SILICONE

(30) Priority: 22.07.2013 JP 2013151531
(43) Date of publication of application: 01.06.2016
(73) Proprietor: Shin-Etsu Chemical Co., Ltd., Tokyo 100-0004 (JP)
(72) Inventor: HAYASHIDA, Osamu, Annaka-shi Gunma 379-0224 (JP); HOTTA, Masakatsu, Annaka-shi Gunma 379-0224 (JP); KOIKE, Yoshiaki, Annaka-shi Gunma 379-0224 (JP); KASHIMA, Atsuhito, Annaka-shi Gunma 379-0224 (JP)
(74) Representative: Ter Meer Steinmeister & Partner
(86) International application number: PCT/JP2014/063400
(87) International publication number: WO 2015/011971

(56) References cited:
- EP-A1- 0 456 557
- GB-A- 2 460 513
- JP-A- H0 912 888
- JP-A- S5 160 240
- JP-A- 2000 169 706
- JP-A- 2002 105 317
- JP-A- 2004 231 865
- JP-A- 2012 124 428
- DATABASE CA [Online] CHEMICAL ABSTRACTS SERVICE, COLUMBUS, OHIO, US; 10 April 2002 (2002-04-10), HIRAI, KAZUO ET AL: "Fire-resistant silicone rubber compositions", XP002766672, retrieved from STN Database accession no. 2002:268656 -& JP 2002 105317 A (DOW CORNING TORAY SILICONE) 10 April 2002 (2002-04-10)
- DATABASE CA [Online] CHEMICAL ABSTRACTS SERVICE, COLUMBUS, OHIO, US; 30 April 2002 (2002-04-30), ZOU, HUAWEI ET AL: "Preparation of high temperature- and ablation-resistant rubber composition", XP002766673, retrieved from STN Database accession no. 2012:617678 -& CN 102 424 725 A (UNIV SICHUAN) 25 April 2012 (2012-04-25)

## Description

### TECHNICAL FIELD

This invention relates to a silicone rubber composition which cures into a product exhibiting improved fire resistance (sinterability after burning) and has excellent roll workability during kneading.

### BACKGROUND ART

In the prior art, molded products of rubber materials such as chloroprene rubber and ethylene-propylene-diene rubber are used as refractory building material. With the increasing longevity of buildings, these rubber materials no longer fully meet the requirements for improved weather resistance and creep resistance, and for better prevention of harmful gas emissions during burning. Under the circumstances, molded products of silicone rubber having improved heat resistance, weather resistance and creep resistance are recently used as the refractory building material.

Conventional silicone-based gaskets, however, suffer from the problem that when exposed to high temperatures of fire for a long time, they burn down to ash, leaving no vestige of their original shape and losing the gasket function.

To overcome these drawbacks of silicone rubber-based refractory products, JP-A S63-191841 proposes the addition of a platinum-based compound as a refractory aid. With this approach, however, there is the shortcoming that in a high-level fire test such as a 3-hour fire test, the refractory product cracks and allows the fire to spread, and as its exposure to fire is prolonged, it burns, becoming brittle and spalling from the joint under slight external stresses.

Known refractory gasket materials include a composition comprising an organopolysiloxane containing at least two silicon-bonded hydroxyl groups in the molecule and an organosilane or organopolysiloxane containing at least two silicon-bonded hydrolyzable groups in the molecule, to which zinc oxide and/or aluminum hydroxide and a platinum compound are added (JP-A S60-141778) and a similar composition to which any one of manganese carbonate, mica and black iron oxide, zinc oxide and/or quartz powder, and a platinum compound are added (JP-B H5-73158). It is also proposed to use magnesium hydroxide as a ceramic forming aid (JP-A 2000-169706). However, since these silicone rubber compositions are heavily loaded with fillers, they are undesirably sticky to rolls and very difficult to knead.

### SUMMARY OF THE INVENTION

### PROBLEMS TO BE SOLVED BY THE INVENTION

An object of the present invention is to provide a silicone rubber composition which when molded into a silicone rubber article, can retain the original molded shape even after prolonged exposure to fire because the ash of the burned article sinters (into a ceramic mass), and which moreover exhibits excellent roll processability (or workability) during a kneading step in its production process.

### MEANS FOR SOLVING THE PROBLEMS

Making extensive investigations to attain the above object, the inventors have found that by combining an organopolysiloxane having a degree of polymerization of at least 100 and containing at least two silicon-bonded alkenyl groups, with reinforcing silica having a specific surface area (BET method) of at least 50 m²/g and a curing agent and further with calcined mica having a specific particle size, there is obtained a silicone rubber composition which has excellent roll processability (or workability) and cures into a silicone rubber part exhibiting improved sinterability (shape retention) after burning. The invention is predicated on this finding.

Accordingly, the invention provides a silicone rubber composition as defined below.
[1] A silicone rubber composition comprising
   (A) 100 parts by weight of an organopolysiloxane having a degree of polymerization of at least 100 and containing at least two silicon-bonded alkenyl groups in the molecule,
   (B) 10 to 100 parts by weight of reinforcing silica having a specific surface area (BET method) of at least 50 ₘ²_{/g},
   (C) 1 to 100 parts by weight of calcined mica having an average particle size of up to 20 µm, and
   (D) an effective amount of a curing agent.
[2] The silicone rubber composition of [1] wherein the calcined mica is obtained by calcining ground muscovite.
[3] The silicone rubber composition of [1] or [2] wherein component (A) is an organopolysiloxane containing at least two alkenyl groups in the molecule, having a degree of polymerization of 3,000 to 100,000, and represented by the average compositional formula (I):

   RₐSiO_{(4-a)/2} (I)

   wherein R is each independently a substituted or unsubstituted, monovalent hydrocarbon group, 0.01 to 10 mol% of the entire R groups being alkenyl groups, and a is a positive number of 1.95 to 2.05.
[4] The silicone rubber composition of any one of [1] to [3] wherein component (D) is an organic peroxide.
[5] The silicone rubber composition of any one of [1] to [3] wherein component (D) is a combination of an organohydrogenpolysiloxane having at least two SiH groups in the molecule with a platinum group metal-based catalyst.
[6] The silicone rubber composition of any one of [1] to [5] which is used to form a refractory gasket.

### ADVANTAGEOUS EFFECTS OF THE INVENTION

The silicone rubber composition of the invention has excellent roll workability during kneading and cures into a silicone rubber part exhibiting improved shape retention after burning (or sintering). The composition is especially useful as refractory material for building parts such as refractory gaskets.

### BRIEF DESCRIPTION OF DRAWINGS

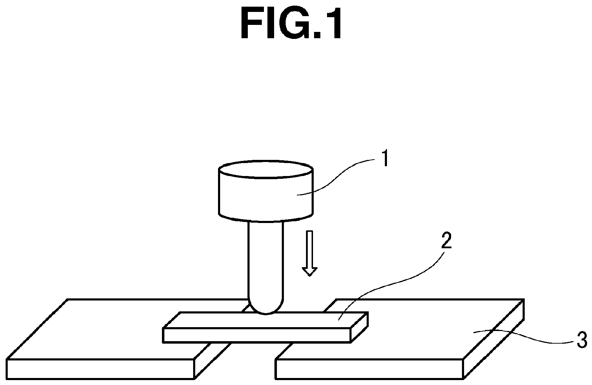

[Fig. 1] FIG. 1 is a schematic view for illustrating a method of measuring fracture strength in Example.

### EMBODIMENT FOR CARRYING OUT THE INVENTION

Now the invention is described in detail.

Component (A) used in the silicone rubber composition is an organopolysiloxane having a degree of polymerization (or the number of silicon atoms per molecule) of at least 100, preferably at least 1,000, and more preferably at least 1,200 and containing at least two silicon-bonded alkenyl groups, and serves as a main component (or base polymer) of the composition. The alkenyl-containing organopolysiloxane as component (A) is preferably gum-like (i.e., a non-self-flowing non-liquid mass having a high degree of polymerization and high viscosity) at room temperature (25°C). The silicone rubber composition comprising such a gum-like alkenyl-containing organopolysiloxane as a main component is generally of millable type in that it is gum-like and can be uniformly milled under shear stresses on a kneader such as a roll mill. The alkenyl-containing organopolysiloxane as component (A) is typically represented by the average compositional formula (I), for example.

RₐSiO_{(4-a)/2} (I)

Herein R which may be the same or different is a substituted or unsubstituted monovalent hydrocarbon group and a is a positive number of 1.95 to 2.05, preferably 1.98 to 2.02, and more preferably 1.99 to 2.01.

In the average compositional formula (I), R which may be the same or different is a substituted or unsubstituted monovalent hydrocarbon group of preferably 1 to 12 carbon atoms, more preferably 1 to 8 carbon atoms, examples of which includes alkyl groups such as methyl, ethyl, propyl, butyl, hexyl and octyl, cycloalkyl groups such as cyclopentyl and cyclohexyl, alkenyl groups such as vinyl, allyl and propenyl, cycloalkenyl groups, aryl groups such as phenyl and tolyl, aralkyl groups such as benzyl and 2-phenylethyl, and substituted forms of the foregoing groups in which some or all hydrogen atoms are substituted by halogen, cyano or the like, such as trifluoropropyl. Of these, methyl, vinyl, phenyl and trifluoropropyl groups are preferable, with methyl and vinyl being most preferred. Preferably at least 80 mol%, more preferably at least 90 mol% of R is methyl. Most preferably the entire R groups excluding alkenyl are methyl.

Preferred examples of the alkenyl-containing organopolysiloxane (A) include organopolysiloxanes whose backbone consists of dimethylsiloxane units, or the foregoing organopolysiloxanes in which units having a phenyl, vinyl or 3,3,3-trifluoropropyl group such as diphenylsiloxane units, methylvinylsiloxane units or methyl-3,3,3-trifluoropropylsiloxane units are incorporated as some of backbone dimethylsiloxane units.

The organopolysiloxane as component (A) should have at least two (typically about 2 to about 50, especially about 2 to about 20) alkenyl groups, specifically vinyl groups in the molecule. It is preferred that alkenyl groups account for 0.01 to 10 mol%, especially 0.02 to 5 mol% of the entire R groups in the average compositional formula (I). The alkenyl group may be bonded to a silicon atom at the end of the molecular chain or a silicon atom at an intermediate (or non-terminal) position of the molecular chain, or both. It is preferred that the alkenyl groups be bonded to at least silicon atoms at both ends of the molecular chain. Preferred are those organopolysiloxanes capped with dimethylvinylsilyl, methyldivinylsilyl, trivinylsilyl or the like at the end of the molecular chain.

In the average compositional formula (I), a is a positive number of 1.95 to 2.05. The molecular structure of the organopolysiloxane (A) is basically a linear structure constructed of repeating diorganosiloxane units (R₂SiO_{2/2}) as the backbone and capped at either end of the molecular chain with a triorganosiloxy group (R₃SiO_{1/2}) wherein R is as defined above. It may have a branched structure containing some branched units (RSiO_{3/2} ) within its backbone as long as rubber elasticity is not compromised.

The organopolysiloxane (A) has a degree of polymerization (or the number of silicon atoms per molecule) of at least 100, preferably at least 1,000, more preferably at least 1,200, even more preferably 3,000 to 100,000, and most preferably 4,000 to 20,000. With a degree of polymerization of less than 100, no sufficient rubber strength is obtainable. Notably, the degree of polymerization (or molecular weight) may be determined as weight average degree of polymerization (or weight average molecular weight) by GPC (gel permeation chromatography) versus polystyrene standards using toluene or the like as developing solvent.

The organopolysiloxane alone or a blend of two or more organopolysiloxanes which are different in molecular structure and/or degree of polymerization may be used as component (A).

The organopolysiloxane may be obtained from any well-known techniques, such as (co)hydrolytic condensation of one or more organohalogenosilanes, or ring-opening polymerization of a cyclic polysiloxane in the presence of an alkaline or acidic catalyst.

Component (B) is reinforcing silica, exemplary of which is reinforcing silica fine powder commonly used in silicone rubber compositions, including dry silica such as fumed silica and pyrogenic silica and wet silica such as precipitated silica, with fumed silica being preferred for heat resistance. The silica should have a specific surface area (BET method) of at least 50 ₘ²_{/g}, preferably at least 100 ₘ²_{/g}, and more preferably 100 to 400 m²/g. Silica with a specific surface area (BET method) of less than 50 m²/g is insufficient to impart mechanical strength.

Optionally, the surface of the reinforcing silica may be treated to be hydrophobic with well-known treating agents including organosilane compounds such as methylchlorosilane and organosilazane compounds such as hexamethyldisilazane.

The amount of reinforcing silica (B) added is 10 to 100 parts by weight, preferably 20 to 70 parts by weight, and more preferably 30 to 60 parts by weight per 100 parts by weight of the organopolysiloxane (A). Less than 10 parts by weight of component (B) is too small to achieve sufficient reinforcing effect whereas more than 100 parts by weight adversely affects processability and mechanical strength.

Component (C) is calcined mica which is a characteristic component for the invention and serves to significantly improve the fire resistance performance (i.e., sinterability or shape retention after burning) of silicone rubber obtained by curing the silicone rubber composition. Wet mica and dry mica are commonly used and well known as a fire resistance enhancer for silicone rubber. When these micas are compounded in a millable silicone rubber composition, the stickiness of the composition to rolls is increased to interfere with kneading operation during the production of the composition (e.g., kneading on a roll mill). Since calcined mica is prepared by heat treating (or calcining) mica at a temperature in excess of about 800°C, it is free of moisture and silica which are contained in the untreated mica. This contributes to least cleavage of the silicone polymer (for example, alkenyl-containing organopolysiloxane (A)) and reduces the adhesion to metal surfaces to mitigate the sticking to rolls. Calcined mica is preferably prepared by calcining ground muscovite. Exemplary of the calcined mica is calcined mica which is prepared by calcining ground muscovite and available from Repco Inc.

The calcined mica should have an average particle size (d50) of up to 20 µm (specifically, about 0.5 to about 20 µm, especially about 1 to about 18 µm). If the particle size is beyond the range, the silicone rubber molded article is not fully sintered and converted to ceramic after high-temperature heating (burning or sintering), and the incinerated (sintered) silicone rubber molded article has poor shape retention.

The average particle size is determined, for example, as a cumulative weight average particle size (or median diameter, d50) in particle size distribution measurement by the laser light diffraction method.

The amount of component (C) added is 1 to 100 parts by weight, preferably 10 to 60 parts by weight per 100 parts by weight of the organopolysiloxane (A) . Less than 1 part of component (C) is less effective for improving fire resistance performance whereas more than 100 parts has negative impact on the physical properties such as strength and elongation of silicone rubber.

Component (D) is a curing agent, which is not particularly limited as long as it is effective for curing the silicone rubber composition. Thus any well-known vulcanizers (curing agents) for silicone rubber such as organic peroxide vulcanizers (curing agents) or addition reaction vulcanizers (curing agents) may be used.

Examples of the organic peroxide used as the organic peroxide vulcanizer (curing agent) include benzoyl peroxide, 2,4-dichlorobenzoyl peroxide, p-methylbenzoyl peroxide, o-methylbenzoyl peroxide, 2,4-dicumyl peroxide, 2,5-dimethyl-bis(2,5-t-butylperoxy)hexane, di-t-butyl peroxide, t-butyl perbenzoate, and 1,6-hexanediol bis-t-butylperoxycarbonate, which may be used alone or in admixture.

The organic peroxide may be added in a sufficient amount to cure the silicone rubber composition, and preferably in an amount of 0.1 to 10 parts by weight, more preferably 0.2 to 5 parts by weight per 100 parts by weight of component (A).

When the composition is cured by addition reaction (hydrosilylation addition reaction), a combination of an organohydrogenpolysiloxane (curing agent or crosslinker) with a platinum group metal-based catalyst (curing catalyst) is used as the addition reaction vulcanizer (curing agent).

Exemplary platinum based catalysts are platinum group metal-based catalysts including elemental platinum, platinum compounds, platinum composites, chloroplatinic acid, and complexes of chloroplatinic acid with alcohol compounds, aldehyde compounds, ether compounds and various olefins as well as similar rhodium, palladium, and ruthenium compounds.

The platinum group metal-based catalyst is preferably added in an amount of 1 to 2,000 ppm of platinum group metal based on the weight of the organopolysiloxane (A).

The organohydrogenpolysiloxane used as a curing agent (crosslinker) contains at least 2 (typically, about 2 to about 200), preferably at least 3 (for example, about 3 to about 150, preferably about 4 to about 100) silicon-bonded hydrogen atoms, i.e., SiH groups in the molecule. The organohydrogenpolysiloxane may have a linear, branched, cyclic or three-dimensional network structure. Preferred is an organohydrogenpolysiloxane having a degree of polymerization (i.e., number of silicon atoms per molecule) of up to 300 (for example, about 2 to about 300, especially about 3 to about 150). Examples of the organohydrogenpolysiloxane include 1,1,3,3-tetramethyldisiloxane, 1,3,5,7-tetramethylcyclotetrasiloxane, 1-propyl-3,5,7-trihydrogen-1,3,5,7-tetramethylcyclotetrasiloxane, 1,5-dihydrogen-3,7-dihexyl-1,3,5,7-tetramethylcyclotetrasiloxane, tris(hydrogendimethylsiloxy)methylsilane, tris(hydrogendimethylsiloxy)phenylsilane, methylhydrogencyclopolysiloxane, methylhydrogensiloxane/dimethylsiloxane cyclic copolymers, dual end trimethylsiloxy-capped methylhydrogenpolysiloxane, dual end trimethylsiloxy-capped dimethylsiloxane/- methylhydrogensiloxane copolymers,
dual end dimethylhydrogensiloxy-capped dimethylpolysiloxane, dual end dimethylhydrogensiloxy-capped dimethylsiloxane/- methylhydrogensiloxane copolymers,
dual end trimethylsiloxy-capped methylhydrogensiloxane/- diphenylsiloxane copolymers,
dual end trimethylsiloxy-capped methylhydrogensiloxane/- diphenylsiloxane/dimethylsiloxane copolymers,
dual end trimethylsiloxy-capped methylhydrogensiloxane/- methylphenylsiloxane/dimethylsiloxane copolymers,
dual end dimethylhydrogensiloxy-capped methylhydrogensiloxane/dimethylsiloxane/diphenylsiloxane copolymers,
dual end dimethylhydrogensiloxy-capped methylhydrogensiloxane/dimethylsiloxane/methylphenylsiloxane copolymers, copolymers consisting of (CH₃)₂HSiO_{1/2} units, (CH₃)₃SiO_{1/2} units and SiO_{4/2} units,
copolymers consisting of (CH₃) ₂HSiO_{1/2} units and SiO_{4/2} units, and
copolymers consisting of (CH₃) ₂HSiO_{1/2} units, SiO_{4/2} units and (C₆H₅)₃SiO_{1/2} units.

Preferably the organohydrogenpolysiloxane as a curing agent is added in such an amount that a molar ratio of silicon-bonded hydrogen atoms, i.e., SiH groups in the organohydrogenpolysiloxane to alkenyl groups in the organopolysiloxane (A) may range from 0.5/1 to 5/1. In curing the inventive composition, the curing agent (D) may be of co-vulcanization type, i.e., a combination of an organic peroxide vulcanizer (curing agent) with an addition reaction vulcanizer (curing agent).

Besides the components described above, the silicone rubber composition may further comprise well-known additives for silicone rubber compositions as optional components as long as the benefits of the invention are not impaired, examples of such additives including dispersants for the reinforcing silica filler (for example, α,ω-silanol endcapped diorganosiloxane oligomers), platinum compounds (for example, compounds similar to the platinum based catalysts exemplified as one component of the addition reaction vulcanizer), flame retardants and heat resistance enhancers like iron oxides and halogen compounds, antidegradants, UV absorbers, colorants, and parting agents. Blowing agents may also be added to the composition, which may be molded as sponge.

The silicone rubber composition may be prepared by kneading the above-described components on a well-known milling machine such as a two-roll mill, kneader, or Banbury mixer, although the method is not limited thereto. If necessary, heat treatment (kneading while heating) may be performed. The recommended procedure is by premixing components (A) and (B), optionally heat treating the premix, and adding the component (D) thereto at room temperature. In this procedure, component (C) may be added either before or after heat treatment. When heat treatment is performed, the heat treatment is preferably at a temperature of 100 to 250°C, especially 140 to 180°C for about 30 minutes to about 5 hours although the temperature and time are not particularly limited.

The silicone rubber composition may be molded by a method which is selected in accordance with the desired application (molded article). Suitable molding methods include compression molding, injection molding, transfer molding, atmospheric hot air vulcanization, and steam vulcanization. The curing conditions are not particularly limited and may be suitably selected based on the curing method and the molded article. Typical curing conditions include 80 to 600°C, especially 100 to 450°C and several seconds to several days, especially about 5 seconds to about one hour. If necessary, secondary vulcanization may be carried out, typically at 180 to 250°C for about 1 to about 10 hours.

The silicone rubber composition is useful as refractory material to form building parts such as refractory gaskets.

### EXAMPLES

Examples and Comparative Examples are given below for further illustrating the invention although the invention is not limited thereto. In Examples, all parts are by weight. The degree of polymerization is a weight average degree of polymerization as measured versus polystyrene standards by GPC (gel permeation chromatography) using toluene as developing solvent. The average particle size is a cumulative weight average particle size (d50) determined in particle size distribution measurement by the laser light diffraction method.

### [Example 1]

On a kneader, 100 parts of a linear dimethylpolysiloxane gum consisting of 99.825 mol% of dimethylsiloxane units, 0.15 mol% of methylvinylsiloxane units, and 0.025 mol% of dimethylvinylsiloxy units as siloxy units capping both ends of the molecular chain and having an average degree of polymerization of about 7,000, 45 parts of fumed silica having a specific surface area (BET method) of 200 m²/g (Aerosil 200, Nippon Aerosil Co., Ltd.), and 10 parts of a linear dimethylpolysiloxane capped with a silanol group at both ends of the molecular chain and having a degree of polymerization of 10 were compounded and heat treated at 150°C for 2 hours, forming a silicone rubber compound.

To the resulting rubber compound, on a two-roll mill, 40 parts of calcined mica which was manufactured by calcining ground muscovite (Repco Inc., average particle size 18 µm) and 0.1 part of an alcohol solution of chloroplatinic acid (Pt concentration 2 wt%) were added. Then 1.3 parts of 50 wt% paste of p-methylbenzoyl peroxide was added thereto, yielding a silicone rubber composition.

During the kneading step on the two-roll mill, the stickiness (roll processability) of the composition was rated good (○), fair (Δ) or poor (×) as follows. The results are shown in Table 1.

### (Stickiness)

- ○:: smooth scraping/removal in a test using a 6-inch, hard chromium plated two-roll mill with a roll gap of 2 mm and a sample quantity of 200 g
- Δ:: awkward scraping/removal in a test using a 6-inch, hard chromium plated two-roll mill with a roll gap of 2 mm and a sample quantity of 200 g
- ×:: difficult scraping/removal, stuck to rolls in a test using a 6-inch, hard chromium plated two-roll mill with a roll gap of 2 mm and a sample quantity of 200 g

The composition was press molded through primary vulcanization at 120°C for 10 minutes and secondary vulcanization at 200°C for 4 hours, forming a silicone rubber sheet of 2 mm thick. A rubber piece of 3.5 cm × 3.5 cm was cut out of the rubber sheet and heated at 800°C for 5 minutes in a sintering furnace. As shown in FIG. 1, the sintered piece was set on a test machine equipped with a load cell which was measurable up to 10 kgf where it was broken to measure fracture strength (sinterability). Notably, FIG. 1 illustrates a load cell 1, a sintered piece 2, and a base plate 3. The results are shown in Table 1.

### [Comparative Example 1]

A silicone rubber compound and silicone rubber composition were prepared as in Example 1 except that 40 parts of a commercially available wet ground muscovite (uncalcined, average particle size 22 µm) was used as mica instead of 40 parts of calcined mica (Repco Inc., average particle size 18 µm) in Example 1.

The resulting silicone rubber compound and silicone rubber composition were similarly tested and evaluated for roll processability and sinterability. The results are shown in Table 1.

### [Comparative Example 2]

A silicone rubber compound and silicone rubber composition were prepared as in Example 1 except that 40 parts of calcined mica which was manufactured by calcining ground muscovite and had an average particle size of 22 µm (Repco Inc.) was used instead of 40 parts of calcined mica (Repco Inc., average particle size 18 µm) in Example 1.

The resulting silicone rubber compound and silicone rubber composition were similarly tested and evaluated for roll processability and sinterability. The results are shown in Table 1.

**[Table 1]**

| | Example 1 | Comparative Example 1 | Comparative Example 2 |
|---|---|---|---|
| Mica | calcined mica (d50 = 18 µm) | wet ground muscovite (d50 = 22 µm) | calcined mica (d50 = 22 µm) |
| Roll processability | ○ | × | ○ |
| Sinterability (kgf) | 2.0 | 1.8 | 0.5 |

### REFERENCE SIGNS LIST

- 1: load cell
- 2: sintered piece
- 3: base plate

## Claims

1. A silicone rubber composition comprising
(A) 100 parts by weight of an organopolysiloxane having a degree of polymerization of at least 100 and containing at least two silicon-bonded alkenyl groups in the molecule,
(B) 10 to 100 parts by weight of reinforcing silica having a specific surface area (BET method) of at least 50 m²/g,
(C) 1 to 100 parts by weight of calcined mica having an average particle size of up to 20 µm, and
(D) a curing agent in an amount effective for curing the silicone rubber composition.

2. The silicone rubber composition of claim 1 wherein the calcined mica is obtained by calcining ground muscovite.

3. The silicone rubber composition of claim 1 or 2 wherein component (A) is an organopolysiloxane containing at least two alkenyl groups in the molecule, having a degree of polymerization of 3,000 to 100,000, and represented by the average compositional formula (I):
RaSiO_{(4-a/2} (I)
wherein R is each independently a substituted or unsubstituted, monovalent hydrocarbon group, 0.01 to 10 mol% of the entire R groups being alkenyl groups, and a is a positive number of 1.95 to 2.05.

4. The silicone rubber composition of any one of claims 1 to 3 wherein component (D) is an organic peroxide.

5. The silicone rubber composition of any one of claims 1 to 3 wherein component (D) is a combination of an organohydrogenpolysiloxane having at least two SiH groups in the molecule with a platinum group metal-based catalyst.

6. Use of the silicone rubber composition of any one of claims 1 to 5 for forming of a refractory gasket.

## Patentansprüche

1. Silikonkautschukzusammensetzung, umfassend
(A) 100 Gewichtsteile eines Organopolysiloxans mit einem Polymerisationsgrad von mindestens 100 und enthaltend mindestens zwei Silizium-gebundene Alkenylgruppen im Molekül,
(B) 10 bis 100 Gewichtsteile verstärkendes Silica mit einer spezifischen Oberfläche (BET-Methode) von mindestens 50 m²/g,
(C) 1 bis 100 Gewichtsteile calcinierten Glimmer mit einer durchschnittlichen Teilchengröße von bis zu 20 µm, und
(D) ein Härtungsmittel in einer zum Härten der Silikonkautschukzusammensetzung wirksamen Menge.

2. Silikonkautschukzusammensetzung nach Anspruch 1, wobei der calcinierte Glimmer erhalten wird durch Calcinieren von gemahlenem Muskovit.

3. Silikonkautschukzusammensetzung nach Anspruch 1 oder 2, wobei Komponente (A) ein Organopolysiloxan ist, enthaltend mindestens zwei Alkenylgruppen im Molekül, mit einem Polymerisationsgrad von 3.000 bis 100.000, und wiedergegeben durch die durchschnittliche Zusammensetzungsformel (I):
RₐSiO_{(4-a/2} (I)
worin R unabhängig eine substituierte oder unsubstituierte, einwertige Kohlenwasserstoffgruppe ist, wobei 0,01 bis 10 Mol-% der gesamten R-Gruppen Alkenylgruppen sind, und a eine positive Zahl von 1,95 bis 2,05 ist.

4. Silikonkautschukzusammensetzung nach irgendeinem der Ansprüche 1 bis 3, wobei Komponente (D) ein organisches Peroxid ist.

5. Silikonkautschukzusammensetzung nach irgendeinem der Ansprüche 1 bis 3, wobei Komponente (D) eine Kombination aus einem Organohydrogenpolysiloxan mit mindestens zwei SiH-Gruppen im Molekül mit einem Platingruppenmetall-basierten Katalysator ist.

6. Verwendung der Silikonkautschukzusammensetzung nach irgendeinem der Ansprüche 1 bis 5 zur Bildung einer feuerfesten Dichtung.

## Revendications

1. Composition de caoutchouc de silicone comprenant
(A) 100 parties en poids d'un organopolysiloxane ayant un degré de polymérisation d'au moins 100 et contenant au moins deux groupes alcényle liés au silicium dans la molécule,
(B) 10 à 100 parties en poids de silice renforçante ayant une surface spécifique (méthode BET) d'au moins 50 ₘ²_{/g},
(C) 1 à 100 parties en poids de mica calciné ayant une taille de particules moyenne allant jusqu'à 20 µm, et
(D) un agent de durcissement en une quantité efficace pour durcir la composition de caoutchouc de silicone.

2. Composition de caoutchouc de silicone selon la revendication 1, dans laquelle le mica calciné est obtenu par calcination de la muscovite broyée.

3. Composition de caoutchouc de silicone selon la revendication 1 ou 2, dans laquelle le composant (A) est un organopolysiloxane contenant au moins deux groupes alcényle dans la molécule, ayant un degré de polymérisation de 3 000 à 100 000 et représenté par la formule de composition moyenne (I) :
RₐSiO_{(4-a/2} (I)
dans laquelle R représente chacun indépendamment un groupe hydrocarboné monovalent substitué ou non substitué, 0,01 à 10 % en moles de l'ensemble des groupes R étant des groupes alcényle, et a représente un nombre positif de 1,95 à 2,05.

4. Composition de caoutchouc de silicone selon l'une quelconque des revendications 1 à 3, dans laquelle le composant (D) est un peroxyde organique.

5. Composition de caoutchouc de silicone selon l'une quelconque des revendications 1 à 3, dans laquelle le composant (D) est une combinaison d'un organohydrogénopolysiloxane ayant au moins deux groupes SiH dans la molécule avec un catalyseur à base de métal du groupe du platine.

6. Utilisation de la composition de caoutchouc de silicone selon l'une quelconque des revendications 1 à 5 pour former un joint d'étanchéité réfractaire.
